# EUROPEAN PATENT APPLICATION

(11) **EP 4 113 337 A1**
(43) Date of publication of application: **04.01.2023**
(21) Application number: 22176692.6
(22) Date of filing: 01.06.2022
(51) Int. Cl.: G06F 21/52, G06F 21/55, G06F 21/56, G06N 20/00

(54) **SYSTEM AND METHOD FOR FINE AND COARSE ANOMALY DETECTION WITH MULTIPLE AGGREGATION LAYERS**

(30) Priority: 30.06.2021 US 202117364293
(71) Applicant: NXP B.V., 5656 AG Eindhoven (NL)
(72) Inventor: RENES, Joost Roland, 5656AG Eindhoven (NL); BOS, Joppe Willem, 5656AG Eindhoven (NL); VESHCHIKOV, Nikita, 5656AG Eindhoven (NL)
(74) Representative: Krott, Michel

(57) **Abstract**

Embodiments address the problem of detecting anomalies in data sets with respect to well-defined normal behavior. Deviations of data collected in real-time are detected using a previously observed distribution of data known to be benign. Embodiments provide techniques to detect varying types of anomalies by creating multiple aggregation layers having varying granularities on top of the lowest level of data collection. This allows detection of fine anomalies that strongly impact single data points, as well as coarse anomalies that detect multiple data points less strongly. Machine learning models are trained and used to compare real-time data sets against behavior of a benign data set in order to detect differences and to flag anomalous behavior.

## Description

### BACKGROUND

### Field

This disclosure relates generally to information system security, and more specifically, to anomaly detection in data sets with respect to well-defined normal behavior.

### Related Art

As the value and use of information continue to increase, individuals and businesses seek additional ways to process and store information. An information handling system generally processes, compiles, stores, or communicates information or data for business, personal, or other purposes, thereby allowing users to take advantage of the value of the information. Because technology and information handling needs and requirements vary between different users or applications, information handling systems may also vary regarding what information is handled, how the information is handled, how much information is processed, stored, or communicated, how quickly and efficiently the information may be processed, stored, or communicated, and security of the information processing, storage, or communication.

Attacks on information handling systems can have a variety of profiles, including a single significant attack or a series of smaller attacks. While a single significant attack may be readily detectable as an anomaly, a series of smaller attacks (e.g., malicious behavior that stretches over a long period of time or a large set of small fraudulent transactions) can fly under the radar of traditional detection systems. A stealthy anomaly hides malicious behavior by attacking more data points, but with less variance from benign behavior (e.g., having a limited effect on the single data points, with a significant effect over the aggregate). Detecting both a significant attack on a single data point and a set of smaller attacks on multiple data points is important to protecting information handling systems and the data they provide.

### SUMMARY

In accordance with a first aspect of the present disclosure, a method is conceived for detecting anomalies in an operational data set with respect to well-defined normal behavior of an application, the method comprising: providing a training data set, wherein the training data set comprises data points associated with the normal behavior; forming a plurality of aggregated data sets, wherein each aggregated data set comprises information generated from the entire training data set, each aggregated data set comprises entries generated from an associated aggregate of data points from the training data set, each associated aggregate of data points comprises a unique granularity; training a plurality of machine learning models, wherein each machine learning model of the plurality of machine learning models is trained using an associated aggregated data set of the plurality of aggregated data sets; analyzing a plurality of operational data set data points, generated by the application, using the plurality of machine learning models, wherein for each of the plurality of machine learning models, the plurality of operational data set data points are aggregated at the same granularity as that of the associated aggregated data set used to train the machine learning model.

In one or more embodiments, said analyzing comprises determining whether the operational data set data points exhibit anomalous behavior of the environment generating the operational data set from the normal behavior.

In one or more embodiments, said determining comprises: examining results of said analyzing by each machine learning model for anomalous behavior at the associated granularity of that machine learning model; and determining whether the results from any one of the machine learning models exhibits anomalous behavior.

In one or more embodiments, each of the machine learning models comprises a same machine learning algorithm for detecting anomalous behavior.

In one or more embodiments, each of the machine learning models comprises a unique machine learning algorithm for detecting anomalous behavior.

In one or more embodiments, each of the machine learning models comprises a machine learning algorithm for detecting anomalous behavior at the granularity of the associated aggregated data set.

In one or more embodiments, a first machine learning model of the plurality of machine learning models is trained using an aggregated data set comprising single data points from the training data set.

In one or more embodiments, an environment generating the operational data set comprises one of a processor performance monitor, a transaction environment, imaging data, and three-dimensional data.

In accordance with a second aspect of the present disclosure, a system is provided for detecting anomalies in an operational data set generated by an environment with respect to well-defined normal behavior, the system comprising: a processor; a first memory, coupled to the processor, and storing a training data set comprising data points associated with the normal behavior; a second memory, coupled to the processor, and storing instructions executable by the processor, the instructions configured to form a plurality of aggregated data sets, wherein each aggregated data set comprises information generated from the entire training data set, each aggregated data set comprises entries generated from an associated aggregate of data points from the training data set, each associated aggregate of data points comprises a unique granularity; train a plurality of machine learning models, wherein each machine learning model of the plurality of machine learning models is trained using an associated aggregated data set; analyze a plurality of operational data set data points, generated by the environment, using the plurality of machine learning models, wherein for each of the plurality of machine learning models, the plurality of operational data set data points are aggregated at the same granularity as that of the associated aggregated data set used to train the machine learning model.

In one or more embodiments, the instructions configured to analyze comprise further instructions configured to determine whether the operational data set data points exhibit anomalous behavior of the environment from the normal behavior.

In one or more embodiments, the instructions configured to determine comprise further instructions configured to examine results of said analyzing by each machine learning model for anomalous behavior at the associated granularity of that machine learning model; and determine whether the results from any one of the machine learning models exhibits anomalous behavior.

In one or more embodiments, each machine learning model comprises a same machine learning algorithm for detecting anomalous behavior.

In one or more embodiments, each machine learning model comprises a unique machine learning algorithm for detecting anomalous behavior.

In one or more embodiments, each machine learning model comprises a machine learning algorithm for detecting anomalous behavior at the granularity of the associated aggregated data set.

In one or more embodiments, a first machine learning model of the plurality of machine learning models is trained using an aggregated data set comprising single data points from the training data set.

In one or more embodiments, the environment generating the operational data set comprises one of a processor performance monitor, a transaction environment, imaging data, and three-dimensional data.

In accordance with a third aspect of the present disclosure, a system is provided, comprising: a processor; a performance monitoring unit configured to periodically track a performance statistic associated with the processor; a memory, coupled to the processor, and storing instructions executable by the processor, the instructions configured to analyze the performance statistic overtime using a plurality of machine learning models, wherein each machine learning model of the plurality of machine learning models is trained using an associated aggregated data set, each aggregated data set comprises information generated from an entire training data set, each aggregated data set comprises entries generated from an associated aggregate of data points from the training data set, each associated aggregate of data points comprises a unique granularity, for each of the plurality of machine learning models, the performance statistic is aggregated at the same granularity as that of the associated data set used to train the machine learning model, and said analyzing comprises determining whether the performance statistic exhibits anomalous behavior from the training data set.

In one or more embodiments, the instructions for said determining comprise further instructions configured to: examine results of said analyzing by each machine learning model for anomalous behavior at the associated granularity of that machine learning model and determine whether the results from any one of the machine learning models exhibits anomalous behavior.

In one or more embodiments, each of the machine learning models comprises a same machine learning algorithm for detecting anomalous behavior.

In one or more embodiments, each of the machine learning models comprises a unique machine learning algorithm for detecting anomalous behavior.

### BRIEF DESCRIPTION OF THE DRAWINGS

Embodiments of the present invention may be better understood by referencing the accompanying drawings.
Figure 1 is a chart illustrating an example of a time series of hardware performance counters on an internet of things device subject to analysis by embodiments of the present invention.
Figure 2 is a simplified block diagram illustrating an example of machine-learning algorithms using varying aggregation windows collected in parallel, such as that performed by embodiments of the present invention.
Figure 3 is a simplified flow diagram illustrating an example of a data flow for training machine-learning models, in accordance with embodiments of the present invention.
Figure 4 is a simplified flow diagram illustrating an example of a data flow for making inferences by trained machine learning models against new inputs, in accordance with embodiments of the present invention.
Figure 5 is a simplified block diagram illustrating an example of a multi-core applications processor incorporating hardware that can be used to implement the system and method of the present media presentation system.

The use of the same reference symbols in different drawings indicates identical items unless otherwise noted. The figures are not necessarily drawn to scale.

### DETAILED DESCRIPTION

Embodiments of the present invention are intended to address the problem of detecting anomalies in data sets with respect to well-defined normal behavior. Embodiments detect deviations of data collected in real-time from a previously observed distribution of data known to be benign. Such anomalies can often be difficult to detect due to a large variance of data points in normal behavior. Reducing the variance by aggregating multiple data points, such as averaging, loses information about deviations of single points. Embodiments provide techniques to detect varying types of anomalies by creating multiple aggregation layers having varying granularities on top of the lowest level of data collection. This allows detection of fine anomalies that strongly impact single data points, as well as coarse anomalies that impact multiple data points less strongly. Machine learning models are trained and used to compare real-time data sets against behavior of a benign data set in order to detect differences and to flag anomalous behavior.

Embodiments of the present invention apply these machine learning techniques to detect stealthy as well as non-stealthy types of anomalies in behavior. A non-stealthy anomaly is characterized as strongly affecting data behavior in a small window, such that within a small number of data points, or even a single data point, the behavior is significantly changed from normal behavior. By comparison with a benign data set, using a trained model, embodiments can observe differences and flag anomalous behavior. On the other hand, a stealthy anomaly attack hides its behavior by affecting more data points, but less strongly. That is, a stealthy anomaly has only a limited effect on a single data point. Thus, in instances where variance in data point values is large, the effect of the anomaly can be hidden in the noise of the system and therefore be undetectable when investigating a single data point.

In order to capture attacks that result in both non-stealthy and stealthy anomalies, embodiments utilize parallel data aggregation methods that transform a single data set into several data sets that range from very fine (e.g., having little aggregation and high variance in data points) to very coarse (e.g., having strong aggregation and low variance in data points). By executing anomaly detection methods on those types of data sets in parallel there will be stronger detection of the variety of anomalies. For the sake of clarity and simplicity of explanations within this disclosure, examples are focused on temporal data. But the techniques described herein can be applied to any data types that can be analyzed on different levels of detail (e.g., single data point, several data points aggregated together because of their position in space or in time, and the like).

One example of a scenario that can be analyzed using embodiments of the present invention is anomaly detection for Internet of things (loT) devices that is performed using monitoring of a hardware performance counter (HPC). One example of such an HPC is performance monitoring units (PMUs) defined for various families of ARM architecture devices. In such devices, to avoid detection, malware can be used that minimizes an effect on HPCs for a given time period, for example by stretching the malicious behavior over a longer period of time. Embodiments can enable detecting both attacks impacting performance strongly for a short period of time, as well as attacks that impact performance less for a longer period of time.

Another scenario that can be analyzed using embodiments of the present invention is financial fraud detection. In such scenarios, while single large transactions that differ from normal behavior can be easy to detect, small fraudulent deviations can be more difficult to detect. Further, even though single transactions can vary widely, the behavior over a longer period of time will be more stable. As small deviations need to be extended over a long period of time to lead to meaningful gain for a malicious entity, data aggregation will enable analysis of such attacks.

Yet another example scenario is detecting anomalies and data that is not time dependent. For example, embodiments can analyze images or three-dimensional data. In the instance of an image, individual pixels and aggregations of regions of pixels can both be examined for deviation. Separate models are then used to analyze individual pixels and their relations as well as regions of the image.

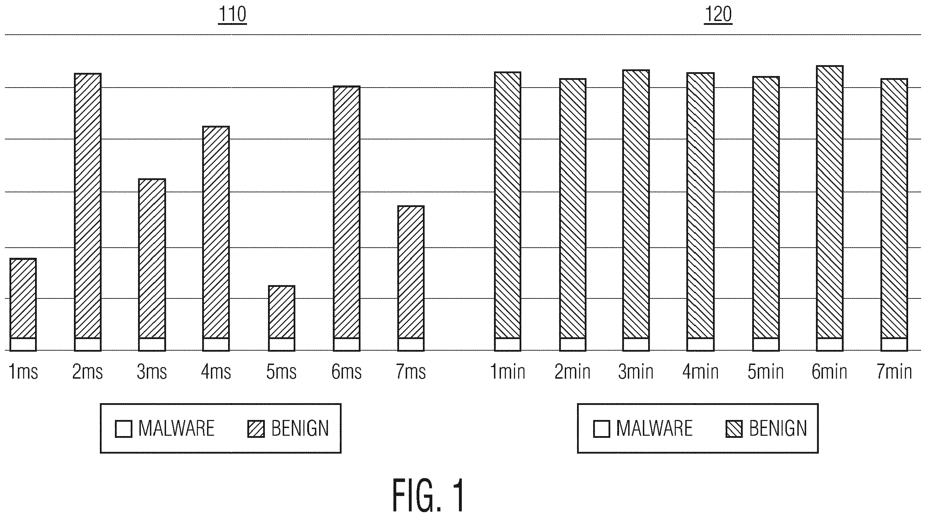

Figure 1 is a chart illustrating an example of a time series of hardware performance counters (HPCs) on an loT device subject to analysis by embodiments of the present invention. Chart 110 illustrates results of sampling performance counters every millisecond, which leads to relatively large variance between each data point. Chart 120 illustrates results of aggregating the data points over every minute, which leads to count data having much smaller variance. It should be noted that the vertical scale of Chart 120 is not the same as that of Chart 110 (e.g., there are significantly higher count values in Chart 120 over the minute time period versus the millisecond time period of Chart 110). The relative portion of HPC's that are used by malware is about the same between the shorter or the longer sampling periods. But HPC data collected over a longer time averages out noise seen between each millisecond data point and therefore there is a smaller variance in the number of counters used by malware versus the number of counters used for benign purposes. Therefore, stealthy or attacks can potentially be detected better using longer aggregated sampling periods.

Since some system attacks can result in significant deviance from normal behavior of a few, or one, data point while other attacks may require analysis over a significant period of time to average out the noise in the aggregate, as shown in Figure 1, embodiments apply machine-learning trained techniques in parallel to data sets aggregated at various granularities. In this manner, anomalies that impact a data point strongly for a short period of time can be detected and responded to, as well as anomalies that have a low impact on a multitude data points.

Detection techniques having a multitude of granularities provides other advantages. For single point analysis, since anomaly inference has to be run for each data point separately, of which there can be many, there is little time for classification of the anomalies. One main advantage of running detection on single data points, on the other hand, is that the system can respond quickly when anomalies are detected and clearly determine where and when the anomaly took place.

When running anomaly detection on an aggregated version of the data set, relative change in behavior is the same. But, as illustrated above, aggregated data can cancel out noise and therefore there is smaller variance in each time sample. Further, as anomaly inference and classification is executed fewer times for a given time, as compared with analysis of each single point, more resources can be dedicated to the analysis leading to a more powerful classification.

For effective anomaly detection, embodiments can provide the best of both techniques. It is desirable to have quick response to anomalies, as well as detectability of stealthy anomalies. Embodiments, therefore, train a machine learning system on known data aggregated using various granularities, create models for these different granularity data sets, and perform inference for those models in an execution environment. During analysis of an executing environment, data aggregation is performed on the fly and the machine learning models are applied to the aggregated execution environment data sets.

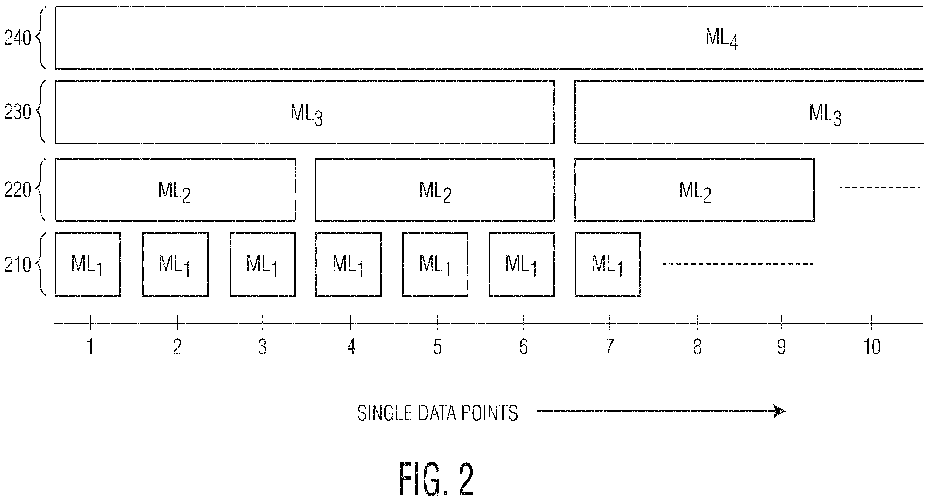

Figure 2 is a simplified block diagram illustrating an example of machine learning algorithms using varying aggregation windows collected in parallel, such as that performed by embodiments of the present invention. MLᵢ is a machine learning algorithm for a sampling granularity "i". A choice of the granularities of aggregation windows and a number of machine learning algorithms to run in parallel depends on the nature of the application. For scenarios that are resource constrained (e.g., many embedded systems), fewer aggregation windows and analysis models may be used (e.g., aggregating every 1000 data points, for example), while applications having more resources may run many aggregation windows and analysis models (e.g., aggregation every 10, 100, and 1000 data points) at the same time. Figure 2 illustrates four different granularities of aggregation windows 210, 220, 230, and 240. Aggregation window 210 analyzes a short data period (e.g., HPC counters measured at 1 ms intervals), aggregation window 220 aggregates three data periods, aggregation window 230 aggregates six data periods, and aggregation window aggregates 12 data periods.

Factors that can be taken into account when determining the number of data points included in an aggregation window for analysis include, for example, the normal activity of the application. That is, does the application typically perform activities on a short timescale or does the application typically perform activities over a long timescale (e.g., one time every four days). Another normal activity factor can be how long an application functions once the application is activated (for example, milliseconds or minutes). As discussed above, another factor can be the resources available to perform detection operations. Longer aggregation periods or lower powered classification can be used for resource-limited applications, where quick response may not be required.

Embodiments can also use a rolling window for aggregation. For example, an aggregation layer that having a granularity of ten samples can aggregate data points 1-10, 2-11, 3-12, and so on, as opposed to 1-10, 11-20, 21-30, as illustrated in Figure 2. Using a rolling window will result in more training examples from a known dataset due to the overlap in the aggregate samples. A rolling window can also result in better detection in an execution environment because single data points including anomalous behavior will be in several consecutive aggregate samples. But analysis will need to be run more often (e.g., for every data point, as opposed to every ten data points). This will be a preferred method for applications executing on devices with more resources, while resource-constrained devices may not opt for a rolling window.

In a typical implementation of embodiments of the present invention, multiple machine learning models can be executing simultaneously. Therefore, classifications can be received from the multiple models at the same time. Handling the various classifications is dependent upon the nature the application. For example, if it is important to avoid false positives, then one can wait until several anomaly detections have been registered by the models. On the other hand, if avoiding malicious behavior is a top priority, then as soon as an anomaly is detected the system can respond.

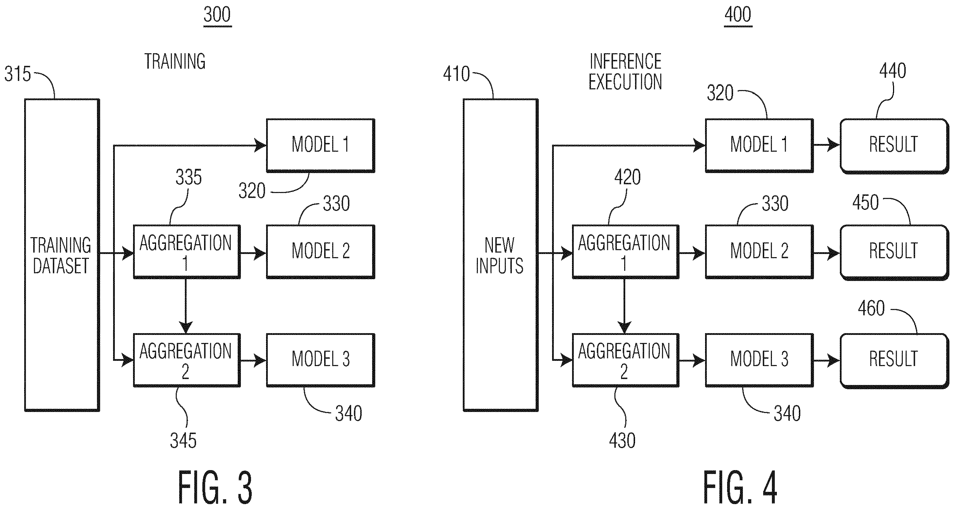

Figure 3 is a simplified flow diagram illustrating an example of a data flow 300 for training machine learning models, in accordance with embodiments of the present invention. Combining several machine learning models into a single model is known in the art of machine learning. There are several common approaches such as, for example, stacking, ensemble learning, and boosting. Each scheme has a small variant that can have other identifying names. "Stacking" employs several machine learning models to produce an intermediate output and then combines the outputs using yet another machine learning model to make a final prediction. "Ensemble Learning" employs several different machine learning algorithms to build several models, and then the final prediction is made based on a combination (e.g., voting) of the outcomes predicted by all the models. "Boosting," on the other hand, uses different partial subsets of a data set to create several machine learning models from those subsets, and then each model generates a prediction, and finally each prediction is provided to a voting scheme to determine a final prediction.

Embodiments employ a different method for combining models into a single model. As illustrated in Figure 3, training 300 involves providing machine learning models 320, 330, and 340 different sized aggregations of training data set 315. As illustrated, a first machine learning model 320 is trained from individual data points from training data set 315 (e.g., ML₁ 210 from Figure 2). A second machine learning model 330 is trained from a first aggregation level from the training data set (e.g., ML₂ from Figure 2). A first aggregation mechanism 335 is employed to perform the aggregation, which can include one of sequential aggregation or a rolling aggregation, as discussed above. A third machine learning model 340 is trained from a second aggregation level from the training data set (e.g., ML₃ from Figure 2). A second aggregation mechanism 345 is employed to perform this second aggregation level, which will be the same method of sequential or rolling aggregation as that chosen for the first aggregation mechanism. The second aggregation mechanism will typically aggregate a larger number of data points from training data set 315 than will the first aggregation mechanism. As illustrated, second aggregation mechanism 345 can either draw single data points from training data set 315 to perform the aggregation or use already aggregated data sets from first aggregation mechanism 335.

Training data set 315 contains data associated with a desired mode of operation of the application being classified. For example, the training data set can include hardware performance counter data associated with a processor performing typical operations over an extended period of time. Supervised learning algorithms are used to build models 320, 330, and 340 of the different aggregation levels (e.g., granularities) associated with the training data set. Depending on the nature the application, either a same machine learning algorithm can be used for each aggregation level or different machine learning algorithms can be utilized. When the same machine learning algorithm is utilized for each aggregation level, that makes it fairly easy to re-use existing code bases with a different data set. On the other hand, one anomaly detection algorithm may be better suited for dealing with a large amount of noise in the data sets (e.g., little aggregation) or another may be better suited for dealing with a low noise situation (e.g., significant aggregation). Thus, utilizing the same machine learning algorithm for multiple aggregation layers can lead to suboptimal performance. Utilizing different machine learning algorithms for the various aggregation layers can lead to better performance, allowing selection of an optimal algorithm for each aggregation layer. But this increases the complexity of the machine learning scheme, as multiple models will need to be tuned and optimized.

Figure 4 is a simplified flow diagram illustrating an example of a data flow 400 for making inferences by trained machine learning models against new inputs, in accordance with embodiments of the present invention. In this flow, new inputs 410 (e.g., an operational dataset including information from an operational environment) are generated by the application whose performance is being analyzed by the various models (e.g., hardware performance counters, financial data, and the like). The stream of new inputs are provided to the trained models from Figure 3 (e.g., models 320, 330, and 340) either directly for single data points to be analyzed by first machine learning model 320, or subsequent to aggregation by first aggregation mechanism 420 to machine learning model 330 or second aggregation mechanism 430 to machine learning model 340. Each aggregation mechanism waits until additional data arrives at the aggregation mechanism before submitting the aggregated version of the data to the associated model. As discussed above, aggregation can be either sequential or rolling, depending upon the nature the application.

First machine learning model 320 generates first results 440 quickly over a small or single number of inputs. In certain applications, this allows for the system to react quickly to anomalous data that has a significant effect on a single or small number of data points. Second machine learning model 330 generates second results 450 after analyzing more data generated and then aggregated by the application. Similarly, third machine learning model 340 generates third results 460 after analyzing an even greater amount of data generated and then aggregated by the application. As discussed above, the analysis performed over the greater number of aggregated data points by the second and third machine learning models allows for detection of anomalous behavior that is only exhibited or detectable when averaging out noise from individual or a small aggregate number of data points.

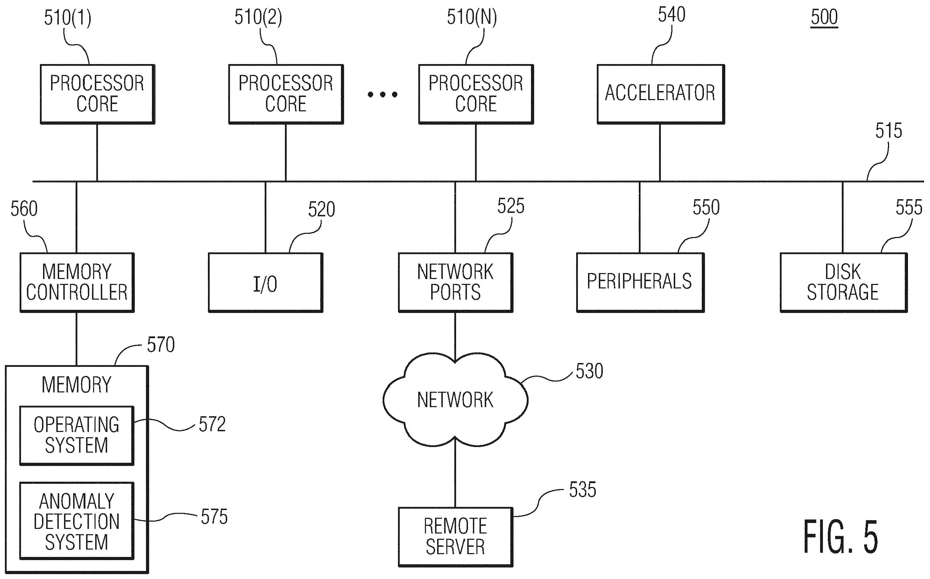

Figure 5 is a simplified block diagram illustrating an example of a multi-core applications processor 500 incorporating hardware that can be used to implement the system and method of the present media presentation system. A system interconnect 515 communicatively couples all illustrated components of the multi-core applications processor. A set of processor cores 510(1)-(N) are coupled to system interconnect 915. Each processor core includes at least one CPU and local cache memory. Further coupled to the system interconnect are input/output devices 520, including necessary input/output devices for an application, such as display, keyboard, mouse, and other associated controllers. The applications processor also includes a network port 525 operable to connect to a network 530, which is likewise accessible to one or more remote servers 535. The remote servers can provide deep learning data sets for the portions of the present system that utilize artificial intelligence / machine learning operations, as discussed above.

An accelerator 540 is also communicatively coupled to processor cores 510. Accelerator 540 is circuitry dedicated to performing specialized tasks, such as machine learning associated with anomaly detection for an application, a process, or data, as discussed above. Through the system interconnect, any of the processor cores can provide instructions to the machine learning accelerator.

In addition to the machine learning accelerator and image signal processor, other peripherals or peripheral controllers 550 and disk storage or disk controllers 555 are communicatively coupled to system interconnect 515. Peripherals 550 can include, for example, circuitry to perform power management, flash management, interconnect management, USB, and other PHY type tasks.

Applications processor 500 further includes a system memory 570, which is interconnected to the foregoing by system interconnect 515 via a memory controller 560. System memory 570 further comprises an operating system 572 and in various embodiments also comprises anomaly detection system 575. Anomaly detection system 575 performs the tasks described above with regard to accessing application data (e.g., performance data associated with the applications processor) and analyzing the application data for anomalous behavior. The anomaly detection system can access accelerator 540 if such an accelerator is present and configured for acceleration of machine learning functions associated with anomaly detection. Anomaly detection system 575 includes the instructions necessary to configure the applications processor, and all implicated portions thereof, to perform the processes discussed herein.

Embodiments of the present invention can detect anomalies in data associated with normally well-defined behavior. Machine-learning models are trained against a data set containing data associated with the normal behavior. Each machine-learning model is trained against data gathered from the data set at different granularities, which subsequently allows for detection of anomalous behavior in a new set of data (e.g., data gathered during execution of a system) at different granularities associated with the data (e.g., time, number of transactions, number of pixels). In so doing, the anomaly detection system can respond to anomalies quickly for anomalies detectable at small granularities or analyze behavior over a longer period of time for anomalies detectable at larger granularities. Embodiments also allow for selection of anomaly detection models that impact resource consumption of a system in an appropriate manner for the types of anomalies anticipated and available computational resources.

By now it should be appreciated that there has been provided a method for detecting anomalies in an operational data set from an operational environment with respect to well-defined normal behavior. The method includes providing a training data set with the training data set includes data points associated with the normal behavior, forming a plurality of aggregated data sets, training a plurality of machine learning models where each machine learning model of the plurality of machine learning models is trained using an associated aggregated data set, generating a plurality of operational data set data points, analyzing the plurality of operational data set data points using the plurality of machine learning models. Each aggregated data set includes information generated from the entire training data set and includes entries generated from an associated aggregate of data points from the training data set. Each associated aggregate of data points includes a unique granularity. For each of the plurality of machine learning models, the plurality of operational data set data points are aggregated at the same granularity as that of the associated aggregated data set used to train the machine learning model.

In one aspect of the above embodiment, the analyzing includes determining whether the operational data set data points exhibit anomalous behavior of the environment generating the operational data set from the normal behavior. In a further aspect, the determining includes examining results of said analyzing by each machine learning model for anomalous behavior at the associated granularity of that machine learning model and determining whether the results from any one of the machine learning models exhibit anomalous behavior.

In another aspect of the above embodiment, each of the machine learning models includes a same machine learning algorithm for detecting anomalous behavior. In another aspect, each of the machine learning models includes a unique machine learning algorithm for detecting anomalous behavior. In a further aspect, each of the machine learning models includes a machine learning algorithm for detecting anomalous behavior at the granularity of the associated aggregated data set.

In another aspect of the above embodiment, a first machine learning model of the plurality machine learning models is trained using an aggregated data set including single data points from the training data set. In another aspect of the above embodiment, an environment generating the operational data set includes one of a processor performance monitor, a transaction environment, imaging data, and three-dimensional data.

Another embodiment of the present invention provides a system for detecting anomalies in an operational data set generated by an environment with respect to well-defined normal behavior. The system includes: a processor; a first memory coupled to the processor and storing a training data set including data points associated with the normal behavior; a second memory, coupled to the processor, and storing instructions executable by the processor. The instructions are configured to form a plurality of aggregated data sets, train a plurality of machine learning models, generate a plurality of operational data set points by the environment, and analyze the plurality of operational data set data points using the plurality of machine learning models. Each aggregated data set includes information generated from the entire training data set and each aggregated data set includes entries generated from an associated aggregate of data points from the training data set. Each associated aggregated data points includes a unique granularity. Each machine learning model of the plurality machine learning models is trained using an associated aggregated data set. For each of the plurality of machine learning models, the plurality of operational data set data points are aggregated at the same granularity as that of the associated aggregated data set used to train the machine learning model.

In one aspect of the above embodiment, the instructions configured to analyze include further instructions configured to determine whether the operational data set data points exhibit anomalous behavior of the environment from the normal behavior. In a further aspect, the instructions configured to determine include further instructions configured to examine results of the analyzing by each machine learning model for anomalous behavior at the associated granularity of that machine learning model and determine whether the results from any one of the machine learning models exhibits anomalous behavior.

In another aspect of the above embodiment, each machine learning model includes a same machine learning algorithm for detecting anomalous behavior. In another aspect of the above embodiment, each machine learning model includes a unique machine learning algorithm for detecting anomalous behavior. In a further aspect, each machine learning model includes a machine learning algorithm for detecting anomalous behavior at the granularity of the associated aggregated data set.

In another aspect of the above embodiment, a first machine learning model of the plurality machine learning models is trained using an aggregated data set including single data points from the training data set. In yet another aspect, the environment generating the operational data set includes one of a processor performance monitor, a transaction environment, imaging data, and three-dimensional data.

Another embodiment of the present invention provides a system that includes: a processor; a performance monitoring unit configured to periodically track a performance statistic associated with the processor; and a memory coupled to the processor and storing instructions executable by the processor. The instructions are configured to analyze the performance statistic overtime using a plurality of machine learning models. Each machine learning model of the plurality machine learning models is trained using an associated aggregated data set. Each aggregated data set includes information generated from entire training data set. Each aggregated data set includes entries generated from associated aggregate of data points from the training data set. Each associated aggregate of data points includes a unique granularity. For each of the plurality of machine learning models, the performance statistic is aggregated at the same granularity as that of the associated data set used to train the machine learning model. The analyzing includes determining whether the performance statistic exhibits anomalous behavior from the training data set.

In one aspect of the above embodiment, the instructions for the determining include further instructions configured to examine results of the analyzing by each machine learning model for anomalous behavior at the associated granularity of that machine learning model and determine whether the results from any one of the machine learning models exhibits anomalous behavior. In another aspect, each of the machine learning models includes a same machine learning algorithm for detecting anomalous behavior. In yet another aspect, each of the machine learning models includes a unique machine learning algorithm for detecting anomalous behavior.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention has been described with respect to specific conductivity types or polarity of potentials, skilled artisans appreciated that conductivity types and polarities of potentials may be reversed.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

The term "program," as used herein, is defined as a sequence of instructions designed for execution on a computer system. A program, or computer program, may include a subroutine, a function, a procedure, an object method, an object implementation, an executable application, an applet, a servlet, a source code, an object code, a shared library/dynamic load library and/or other sequence of instructions designed for execution on a computer system.

Some of the above embodiments, as applicable, may be implemented using a variety of different information processing systems. For example, although Figure 1 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Also, for example, in one embodiment, the illustrated elements of system 500 are circuitry located on a single integrated circuit or within a same device. Alternatively, system 500 may include any number of separate integrated circuits or separate devices interconnected with each other. For example, memory 570 may be located on a same integrated circuit as processor cores 510(1)-(N) or on a separate integrated circuit or located within another peripheral or slave discretely separate from other elements of system 500. Peripherals 550 and I/O circuitry 520 may also be located on separate integrated circuits or devices. Also, for example, system 500 or portions thereof may be soft or code representations of physical circuitry or of logical representations convertible into physical circuitry. As such, system 500 may be embodied in a hardware description language of any appropriate type.

Furthermore, those skilled in the art will recognize that boundaries between the functionality of the above-described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

All or some of the software described herein may be received elements of system 500, for example, from computer readable media such as memory 570 or other media on other computer systems. Such computer readable media may be permanently, removably or remotely coupled to an information processing system such as system 500. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, and the like; and data transmission media including computer networks, point-to-point telecommunication equipment, and carrier wave transmission media, just to name a few.

In one embodiment, system 500 is a computer system such as a personal computer system. Other embodiments may include different types of computer systems. Computer systems are information handling systems which can be designed to give independent computing power to one or more users. Computer systems may be found in many forms including but not limited to mainframes, minicomputers, servers, workstations, personal computers, notepads, personal digital assistants, electronic games, automotive and other embedded systems, cell phones and various other wireless devices. A typical computer system includes at least one processing unit, associated memory and a number of input/output (I/O) devices.

A computer system processes information according to a program and produces resultant output information via I/O devices. A program is a list of instructions such as a particular application program and/or an operating system. A computer program is typically stored internally on computer readable storage medium or transmitted to the computer system via a computer readable transmission medium. A computer process typically includes an executing (running) program or portion of a program, current program values and state information, and the resources used by the operating system to manage the execution of the process. A parent process may spawn other, child processes to help perform the overall functionality of the parent process. Because the parent process specifically spawns the child processes to perform a portion of the overall functionality of the parent process, the functions performed by child processes (and grandchild processes, etc.) may sometimes be described as being performed by the parent process.

Although the invention is described herein with reference to specific embodiments, various modifications and changes can be made without departing from the scope of the present invention as set forth in the claims below. For example, the number of machine-learning models and associated granularities used and the nature of the application generating the well-defined normal behavior data. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for detecting anomalies in an operational data set with respect to well-defined normal behavior of an application, the method comprising:
providing a training data set, wherein the training data set comprises data points associated with the normal behavior.
forming a plurality of aggregated data sets, wherein
each aggregated data set comprises information generated from the entire training data set,
each aggregated data set comprises entries generated from an associated aggregate of data points from the training data set,
each associated aggregate of data points comprises a unique granularity;
training a plurality of machine learning models, wherein each machine learning model of the plurality of machine learning models is trained using an associated aggregated data set of the plurality of aggregated data sets;
analyzing a plurality of operational data set data points, generated by the application, using the plurality of machine learning models, wherein
for each of the plurality of machine learning models, the plurality of operational data set data points are aggregated at the same granularity as that of the associated aggregated data set used to train the machine learning model.

2. The method of Claim 1 wherein said analyzing comprises determining whether the operational data set data points exhibit anomalous behavior of the environment generating the operational data set from the normal behavior.

3. The method of Claim 2 wherein said determining comprises:
examining results of said analyzing by each machine learning model for anomalous behavior at the associated granularity of that machine learning model; and
determining whether the results from any one of the machine learning models exhibits anomalous behavior.

4. The method of any preceding Claim wherein each of the machine learning models comprises a same machine learning algorithm for detecting anomalous behavior.

5. The method of any preceding Claim wherein each of the machine learning models comprises a unique machine learning algorithm for detecting anomalous behavior.

6. The method of Claim 5 wherein each of the machine learning models comprises a machine learning algorithm for detecting anomalous behavior at the granularity of the associated aggregated data set.

7. The method of any preceding Claim wherein a first machine learning model of the plurality of machine learning models is trained using an aggregated data set comprising single data points from the training data set.

8. The method of any preceding Claim wherein an environment generating the operational data set comprises one of a processor performance monitor, a transaction environment, imaging data, and three-dimensional data.

9. A system for detecting anomalies in an operational data set generated by an environment with respect to well-defined normal behavior, the system comprising:
a processor;
a first memory, coupled to the processor, and storing a training data set comprising data points associated with the normal behavior;
a second memory, coupled to the processor, and storing instructions executable by the processor, the instructions configured to
form a plurality of aggregated data sets, wherein
each aggregated data set comprises information generated from the entire training data set,
each aggregated data set comprises entries generated from an associated aggregate of data points from the training data set,
each associated aggregate of data points comprises a unique granularity;
train a plurality of machine learning models, wherein each machine learning model of the plurality of machine learning models is trained using an associated aggregated data set;
analyze a plurality of operational data set data points, generated by the environment, using the plurality of machine learning models, wherein for each of the plurality of machine learning models, the plurality of
operational data set data points are aggregated at the same granularity as that of the associated aggregated data set used to train the machine learning model.

10. The system of Claim 9 wherein the instructions configured to analyze comprise further instructions configured to determine whether the operational data set data points exhibit anomalous behavior of the environment from the normal behavior.

11. The system of Claim 10 wherein the instructions configured to determine comprise further instructions configured to
examine results of said analyzing by each machine learning model for anomalous behavior at the associated granularity of that machine learning model; and
determine whether the results from any one of the machine learning models exhibits anomalous behavior.

12. The system of any one of Claims 9 to 11 wherein each machine learning model comprises a same machine learning algorithm for detecting anomalous behavior.

13. The system of any one of Claims 9 to 12 wherein each machine learning model comprises a unique machine learning algorithm for detecting anomalous behavior.

14. The system of Claim 13 wherein each machine learning model comprises a machine learning algorithm for detecting anomalous behavior at the granularity of the associated aggregated data set.

15. The system of any one of Claims 9 to 14 wherein a first machine learning model of the plurality of machine learning models is trained using an aggregated data set comprising single data points from the training data set.
